# EUROPEAN PATENT SPECIFICATION

(11) **EP 1 985 383 B1**
(45) Date of publication and mention of the grant of the patent: **27.01.2016**
(21) Application number: 08007203.6
(22) Date of filing: 11.04.2008
(51) Int. Cl.: B08B 15/02, B01L 1/00

(54) **Laboratory workstation with fume hood and process for controlling the workstation**
Labor-Arbeitsstation mit Abzugshaube und Verfahren zum Steuern der Arbeitungsstation
Poste de travail de laboratoire avec hotte d'aspiration et procédé de commande du poste de travail

(30) Priority: 11.04.2007 EP 07425208
(43) Date of publication of application: 29.10.2008
(73) Proprietor: Diapath S.p.A., 24057 Martinengo (BG) (IT)
(72) Inventor: Bergamini, Vladimiro, 24057 Martinengo (BG) (IT); Conte, Andrea, 24121 Bergamo (IT)
(74) Representative: Trupiano, Federica

(56) References cited:
- DE-A1- 19 921 409
- DE-C1- 10 217 904
- US-A- 5 674 381

## Description

The present invention refers to a laboratory workstation with fume hood equipped with filter, more specifically to a workstation with fume hood equipped with filter for use in pathologic anatomy laboratories, and to the process thereof.

Workstations with fume hood equipped with filter are commonly used in hospital laboratories and chemistry laboratories, research centres and analysis centres and anywhere else where substances hazardous or potentially hazardous to the health of their operators are used. In the following disclosure the term "laboratory workstation with fume hood" includes chemistry fume hoods, pathological anatomy laboratory fume hoods and workstations, bacteriological hazard detection laboratory fume hoods, cabinets with fume hoods for storing samples or chemicals, benches with fume hoods and similar devices through which air is sucked and passed through a filter before it is released to the atmospheres.

By "workstations with fume hoods for histopathological purposes" we mean devices with which cutting operations of organic tissue samples and sample preparation operations (i.e. dyeing) for cytological or histological purposes are carried out; these operations involve the manipulation of organic substances from which samples are obtained and the use of histological fixatives, such as formalin, and dyes for the sample. In these workstations, HEPA type filters, active and activated carbon filters with specific reagents, such as formaldehyde and other filters such as of potassium permanganate are used.

Fume hoods are provided with a work area, for instance a tabletop equipped with tools suitable for the analyses to be carried out, a washbasin and a tap for water or other substances etc. In cabinets with fume hoods, the work area includes one or more shelves where the containers are stored for samples or chemical substances. Cutting stations with a fume hood for pathological anatomy laboratories, include also tables with fume hoods, i.e. tables where the macroscopic samples are reduced and autoptical tables with fume hood where the samples are obtained from corpses. In these devices the work area consists in the table top and does not include containment walls in the work area. The histopathological workstations for dyeing include dyeing devices and slide holders.

The work area can be accessed directly from outside the workstation or it can be partially or completely closed by means of a vertical shutter. For instance, fume hoods are generally provided with a vertically mobile transparent shutter to close all or part of the work area so as to enable the operator to put his hands inside the area and still be protected against inhaling noxious substances.

The air inside the work area is sucked, filtered and discharged. Suction is carried out by means of one ore more fans usually located above the work area. The sucked air is conveyed to a discharge section; one or more filtering elements trap any noxious/dangerous particles and/or substances present in the sucked air for their removal before being discharged. Discharge sometimes occurs directly into the room, that is the room where the workstation with fume hood is located; preferably the discharge occurs in to the atmosphere, outside the buildings where the laboratory is installed and in this case the workstation filter and the suction group are far from the workstation itself, for example outside the building.

The filtering elements can be of various types according to the different applications of the workstation with fume hood. The type of filtering elements is generally selected according to the substances, products or particles to be filtered. For instance, the materials used for manufacturing the filtering elements differ according to whether organic vapour, formaldehyde, ammonia, chlorine or other substances prevail in the sucked air.

For example, the filtering elements called HEPA are used mostly for hoods intended for the treatment of substances containing bacteria; activated carbon-based filtering elements are used for example for hoods intended for pathological anatomy laboratories.

Active carbon is a natural, amorphous material which can be "activated" by means of a physico-chemical process. Activated carbon grains have a porosity which is greater than that of untreated carbon grains. Its capacity of fixing filtrated pollutant molecules, known as adsorption capacity, is equal to about 2000 m²/g (g = gram of activated carbon), thus superior to the non-activated carbon adsorption capacity, which is equal to about 1200 m²/g. Activated carbon-based filtering elements can adsorb many aliphatic and aromatic hydrocarbons, solvents, organic vapours, aldehydes, ketones, alcohols, organic acids, sulphurized compounds, nitrogenous compounds etc.

For specific applications, such as abating chemical substances having molecular weight mw<30 and boiling point bp<60°C, activated carbon-based filtering elements are impregnated with compounds capable of chemically reacting with the substance to be filtered, in order to fix or neutralise it.

Workstations with fume hoods are generally provided with several filtering elements, each optimised to trap one or more pollutants, dust and included particles.

The filtering capacity of the filtering elements drops with time, that is, it decreases with the use of the workstations with fume hoods.

For example, notwithstanding the type of activated carbon used, the life of activated carbon-based filtering elements, for instance, depends mainly on the concentration of the substances to be filtered in the air sucked by the work area, on the frequency with which work-station operators use the substances, on the thermohygrometric conditions in the environment where the workstation with fume hood is installed, etc. Filtering element life is difficult to estimate a priori. Filtering element manufacturers use statistical data and experimental tests to achieve a reliable estimate of actual filtering element life. Periodical checks on all workstation filtering elements must however be made to guarantee their efficiency. Most current standards specify mandatory monitoring, every month for instance.

Checking the filtering capacity of the elements generally involves volumetric sampling of air expelled through the same filtering elements. When the filtering capacity is below a reference standard, the corresponding filtering element must be replaced and disposed of; this phase is particularly critical if the filters are those used in pathological anatomy laboratories or those of the HEPA type.

The use of workstations with fume hoods equipped with exhausted filtering elements, i.e. elements that have no filtering capacity left, can cause serious hazards to the health of users and of those operating in the same environments or nearby.

For example a filter with exhausted carbons will enable formalin to pass through, thus discharging it to the atmosphere; a clogged filter will be unable to remove air with sufficient speed so as to prevent vapours from partly escaping from the hood into the work area; a clogged HEPA filter can lead to biological contamination of the environment.

US5674381 discloses a prior art laboratory workstation with fume hood and a process for controlling the workstation. This document describes a generic filtering system intended for air, gas and liquids, and specifically for hoovers and welding devices, wherein the filter has a tag or similar marker that is placed onto the filter itself and that is read by a reading unit placed besides the filter.

The main drawback of modern laboratory workstations provided with fume hoods is that operators can make mistakes in managing the filtering elements, e.g. they can install an element not suitable for end use on the fume hood, or poor quality elements, or lasting less than as specified, or again can continue using filtering elements even after they are exhausted.

The aim of the present invention is to provide a laboratory workstation with fume hood, that overcomes the drawbacks of conventional workstations in a simple and efficient way, enabling a simplified management of the filtering elements and ensuring a high functional level thereof.

A further aim of the present invention is to provide a process for controlling a laboratory workstation with fume hood, equipped with filtering elements, which allows conventional system drawbacks to be solved, preventing the workstation from being used with exhausted or potentially poorly inefficient filtering elements.

These and other aims are achieved by the present invention concerning a workstation with fume hood according to claim 1.

The laboratory workstation with fume hood comprises an electronic marker associated to said filtering element and a control unit for the detection of said marker, said marker being separate from the filtering element so as to be read.

The control unit, which is electronic too, includes reading means to which the marker is also associated, by putting it close or by fitting it in the reading means. According to a preferred embodiment of the present invention, the marker contains a memory wherein filtering element data, such as the filtering element manufacturer, the type (HEPA, activated carbon etc), the estimated filtering element life, its relative compatibility with one or more chemical substances, the recommended procedure for disposal of the exhausted filtering element, and the workstation operation instructions according to the filter type are stored (preferably coded).

The present invention also includes a process for controlling a laboratory workstation with fume hood according to claim 8.

The control unit acquires and processes the data stored or coded in the marker memory, and modifies, if necessary, workstation operation depending on the process results. For example, if the control unit fails to identify a marker, it can prevent workstation activation, for example by blocking the air suction systems. If the marker is identified and the manufacturer is authorised, the control unit enables regular operation of the workstation with fume hood and can process the other data coded in the marker.

The marker is preferably selected from a smart card or a chip card, an RFID electronic tag, or similar identification electronic devices. Chip cards or smart cards or the RFID tag are added by filtering element manufacturers to their packages, without being bound by the filtering element or, if bound, they are so in such a way that they can be removed easily. Markers, alternatively, may be provided totally separated from the relevant filter, for example, with a sales invoice. The control unit is provided with a reader of said markers. When replacing an exhausted filtering element with a new one, the operator of the workstation with fume hood inserts into or places near the control unit reader the chip card or marker associated with the new filtering element. The control unit acquires and processes the data stored in the card. The control unit preferably erases the chip card memory after data acquisition is over. This prevents any possible re-use of the chip card.

The control unit is provided with a memory for storing reference data relating to filtering elements. Data acquired by chip cards, or by electronic markers in general, are compared with reference data. The laboratory workstation with fume hood or laboratory cabinet with fume hood intended for chemical substance storage, is preferably provided with a user interface display. Data relating to the filtering element and acquired by the control unit through the reading of the marker are displayed to provide user information about the filtering element origin and nature, any incompatibility issue with one or more substances, forecast life, disposal procedures and hood operating modes.

The control unit preferably generates an alarm signal or prevents workstation with fume hood from operating when the filtering element has been used as long as its estimated life (the control unit is provided with an internal timer) or whenever other parameters are no longer within the preset range.

The fact that the marker is physically detached from the filter offers numerous advantages. In the first instance, it is not necessary to modify existing filters and their production process, being it only necessary to associate the filter with a programmed marker having the interested filter data therein.

Another advantage is that of making the position of the filter independent from that of the marker reader, thus making it possible to use the invention in devices and plants where the filtering element (s) is/are placed separated and spaced from the workstation with fume hood.

A further advantage is that the marker, being separated from the filtering element, is not subjected to contamination (biological and/or chemical) and is not liable to deteriorate because of severe chemical compounds.

Furthermore, the absence of contamination in the marker makes disposal of the contaminated filter more simple.

The workstation with fume hood and the operation thereof according to the present invention markedly simplify interchangeable filtering element management, by supplying operators with useful information on filtering element life or by blocking workstation operation whenever such filtering elements are exhausted or probably exhausted as used until the end of their estimated life.

Further aspects and advantages of this invention will become more apparent by means of the following description of illustrative and nonlimiting examples, with reference to the attached drawings, wherein:
- Figure 1 is a prospective schematic view of a workstation with fume hood according to the present invention;
- Figure 2 is a block diagram of the process according to the present invention; and
- Figure 3 is a code diagram of the marker.

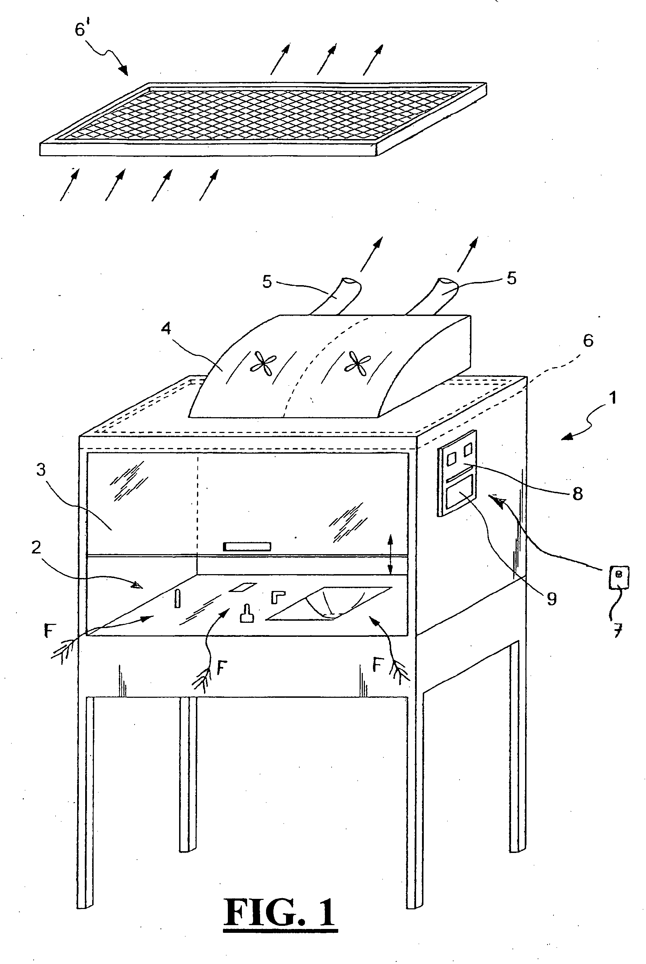

With reference to Figure 1, a laboratory workstation with fume hood 1 is shown according to this invention represented by a fume hood for the preparation of histological and cytological samples.

Fume hood 1 includes a work area 2, in this case an operator accessible work area. The work area is equipped with tools suitable for carrying out treatments of organic tissue samples, a washbasin, a tap, treatment containers with formalin and other reagents, etc.. Work area 2 is only accessible from the front and is closed on its other sides. Front access to work area 2 can be limited by operating a transparent shutter 3 (a vertical screen) that can be moved to reach larger or smaller portions of the access opening to the work area 2. In the embodiment shown in Figure 1, shutter 3 can be moved vertically from a completely closed to a completely open work area 2.

Workstation is provided with suction means adapted to extract air from inside work area 2 and discharge it outside, preferably outdoor with respect to the rooms where workstation is located. In the embodiment shown in Figure 1, fume hood 1 is provided with a suction system 4 drawing air from the work area 2 and conveying it to discharge pipes 5 for its expulsion into the atmosphere. Suction system 4, for instance, includes one or several electric motor operated fans. The operation of suction system 4 creates an air stream that moves in the direction of the arrows shown in Figure 1. The air stream moves from outside towards the work area 2 and from there towards pipes 5. This prevents any noxious substance present in the air within work area 2 from polluting the environment surrounding fume hood 1 and from being inhaled by anyone operating nearby.

Workstation is provided with at least one filtering element 6, of an interchangeable type, that can be located to trap the air stream sucked from work area 2 before its discharge into the atmosphere.

Filtering element 6 can be of different types, for example, a HEPA filter or an activated carbon filter. As mentioned above, there is also a filter (known as pre-filter) having the function of trapping the dust and solid particles to avoid them clogging the actual filter. Figure 1 shows a first filtering element 6' alone and another filtering element 6 installed in fume hood 1 (dotted lines). The shape and the size of the filtering element 6 or 6' are irrelevant for the purposes of this invention.

Fume hoods for pathological anatomy laboratories are equipped with one or more filtering elements 6 or 6'. These filtering elements typically differ according to the substances they have to filter, such as solvents, acids, ammonia, formalin etc.. Fume hood 1 operators can therefore select from various filtering element 6 types. Actually the filtering capacity decreases as the workstation with fume hood 1 use time increases.

Filtering element 6, 6' is associated to a marker 7 capable of univocally identifying its manufacturer. Marker 7 is of the electronic type and is separated from the filter, although it is associated to it as far as the marker contains information relating to the filter 6. The marker 7 is placed in the packaging detached from the filter or, in other embodiments, bound in an easily detachable way to the filter or its packaging, or it is enclosed with sales documents of the filter itself.

In one embodiment just one marker 7 contains the information relating to several filters 6, preferably different from one another, such as for example a prefilter and an activated carbon filter.

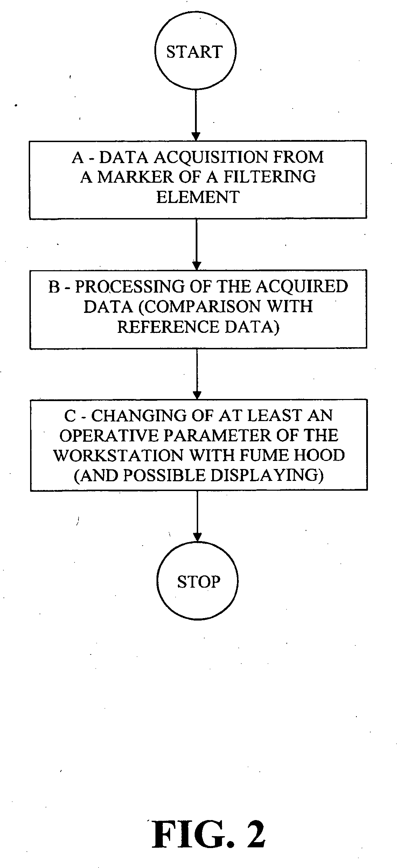

The marker 7 is generally provided with a memory where its manufacturer codes data relating to the filtering element 6; such data include for example the origin of the filter, its characteristics, such as the type of pollutants it can process, hours envisaged for its operation and similar. Preferably, the marker includes also the instructions for the operation of the workstation with fume hood; these instructions include for example data concerning the flow speed of the air through the filter 6, 6' and, consequently, the residence time of the polluting molecules on the filters; actually, in order to complete the degradation and neutralisation reactions the polluting molecules, such as formaldehyde, need to be in contact with the reactants present on the filter for a time sufficient for them to react. The workstation is provided with a control unit 8 the function of which is to read the information present on the marker 7 in order to identify the filter and its characteristics. Specifically, the control unit 8 is programmed to implement the procedure schematically shown in the flow chart in figure 2.

The control unit 8 is provided with a reading group or unit suitable for acquiring such data from the marker. The acquisition is carried out by inserting the marker in the reading unit of the control unit or placing the marker near the reading unit.

The control unit 8 processes the data acquired by comparing them with reference data stored in a memory of its own, for instance, and modifies workstation operation whenever required by process outcome. The control unit 8 is preferably provided with a screen 9 that displays the acquired or processed data useful for fume hood 1 operator.

According to the present invention, the marker 7 is preferably a chip card, i.e. a card provided with data storage memory. Alternatively, the marker 7 is selected from a smart card, an RFID type passive electronic tag, or similar devices, provided they are detached and separated from the filter.

When a new filtering element 6 is installed on the fume hood 1 to replace an exhausted filter, the operator inserts the chip card associated to the new element 6 into the appropriate control unit 8 reader. The unit 8 acquires the data stored inside the chip card memory and compares them with reference data, detecting, for example, whether the manufacturer of the filtering element 6 just installed is included in a list of reliable manufacturers. In the event of positive detection, the unit 8 enables normal fume hood 1 operation. Conversely, if detection is negative, the unit 8 informs the operator of the mistake and blocks fume hood 1 operation. This enables a posteriori monitoring of the quality of the filtering elements 6 used in fume hoods 1 or cabinets.

The list of manufacturers considered as reliable, stored in the control unit 8 memory, can be updated by the workstation manufacturer for example during its maintenance.

Data stored in the chip card are preferably coded. In addition to information on the filtering element manufacturer, information on filtering element 6 estimated life, such as 2, 4, 6 months etc... are also coded. When the control unit 8 reads the chip card, the unit itself 8 calculates the time left before filtering element 6 becomes exhausted, by means timely informing the operator that exhaustion is likely to occur soon (with a signal displayed on the screen 9). The operator is thus always updated on the status of the workstation with fume hood 1 filtering element 6 and on the approach of its expiry for replacement. Other data can be stored in the chip card, for instance, filtering element 6 type, its compatibility with one of more chemical substances, the proper procedure for disposal of the exhausted filtering element etc. These information can be displayed on the screen 9 to inform fume hood 1 operator.

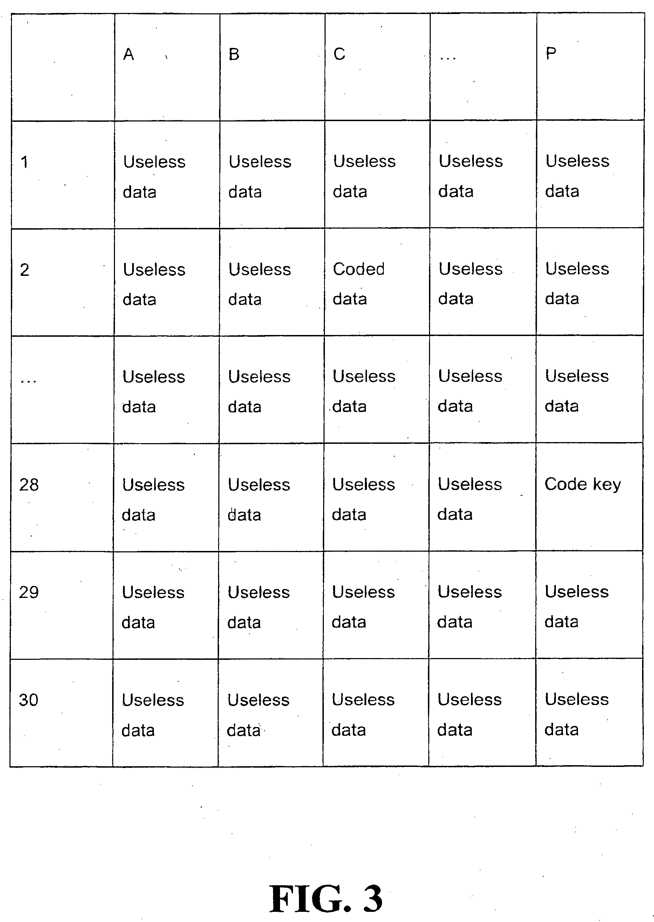

An example, of encoding i.e. of information encryption, is shown in figure 3 where a possible map for storing information on the chip card is shown. In this embodiment the card is filled in with a code on writing only; all the positions from A1 to P30 are written, but only one (for example C2) or more than one of the positions contains coded information and data required. To decode the data in C2, the marker carries also the code key to be used, key that is stored in one of the positions, for example in P28. The control unit is equipped with information relevant to the position where the code can be found, i.e. it is able to read the code (for example a code of the PIN type) and to use it to access to stored data in C2.

Marker 7 preferably can no longer be used upon acquisition of data by the control unit 8. For instance, the chip card memory is erased by the control unit 8 to prevent such chip card from being re-used several times to authorize the replacement of an exhausted filtering element 6 with another unauthorised or unsuitable.

The control unit 8 can change one or more operating parameters of the workstation with fume hood 1 based on the processing outcome of the data acquired by the marker 7. Unit 8 can, for instance, change air suction unit 4 operation to avoid air streams that are not compatible with the filtering element 6 capacity, or it can interrupt suction unit power supply, send a maintenance request to the manufacturer or otherwise modify the operation of the workstation.

## Claims

1. A laboratory workstation with fume hood (1), including a user accessible work area (2), means (4) for sucking air from the work area (2) and for conveying it to a discharge section (5), and at least one filtering element (6), located on the sucked air path, an electronic marker (7) associated to said filtering element (6) and a control unit (8) comprising means for reading said electronic marker (7), said electronic marker including a memory wherein one or more data relevant to the filtering element (6) are stored, wherein said filtering element (6) is selected to trap biological and/or chemical pollutants present in the sucked air and said electronic marker (7) is separate and physically detached from said filtering element (6) in order to be associated to and read by said control unit (8).

2. The workstation according to claim 1, wherein said at least one filtering element (6) is selected from HEPA filters and activated carbon filters

3. The workstation according to claim 1 or 2, wherein said at least one filtering element (6) is located separated and spaced from the said workstation.

4. The workstation according to claims 1, 2 or 3 wherein said data stored in said electronic marker (7) are coded and said electronic marker includes the key of said code.

5. The workstation according to any of claims 1-4, wherein said electronic marker (7) is selected from a smart card, a chip card, an RFID tag and said control unit (8) includes means for acquisition and processing of the data stored in said electronic marker.

6. The workstation according to any of claims 2 to 5, wherein said control unit (8) includes a screen (9) wherein said data relating to the filtering element (6) acquired by said electronic marker (7) are displayed.

7. The workstation according to any of claims 1 to 5, wherein said electronic marker (7) includes the instructions for use of the workstation with fume hood (1).

8. A process for controlling the operation of a laboratory workstation with a fume hood (1) according to claim 1 and including a filtering element (6) selected to trap biological and/or chemical pollutants present in the sucked air and a control unit (8), comprising the steps of: associating said filtering element (6) with an electronic marker (7), said electronic marker (7) being separate and detached from said filtering element (6), associating said detached electronic marker (7) of the filtering element (6) with said control unit (8) in order to be read by the same and acquire one or more data present on said electronic marker (7) to enable or control the workstation operation, processing said data by means of said control unit (8), and modifying at least one workstation operating parameter whenever required based on the above processing.

9. The process according to claim 8, wherein such data are coded and such control unit (8) decodes such coded data by means of further data on said electronic marker (7).

10. The process according to claim 9, wherein said electronic marker (7) gives said control unit (8) instructions relevant to the operation of the workstation.

11. The process according to any claim 8 to 10, wherein said electronic marker (7) is inserted in a reading unit of said control unit (8).

12. The process according to any claim 8 to 11, wherein the data acquired by the control unit (8) and/or the outcome of their processing are displayed to inform the user of the workstation with fume hood (1).

13. The process according to any claim 8 to 12, wherein said data are erased from said electronic marker (7) by the control unit (8).

## Patentansprüche

1. Eine Labor-Arbeitsstation mit Dunstabzugshaube (1), einschließlich einem für Anwender zugänglichen Arbeitsbereich (2), Mittel (4) zum Ansaugen von Luft aus dem Arbeitsbereich (2) und zum Befördern derselben zu einem Abgabeabschnitt (5), und wenigstens einem Filterelement (6), das sich im Strömungspfad der angesaugten Luft befindet, einer elektronischen Markierung (7), die zu dem Filterelement (6) zugehörig ist, und einer Steuereinheit (8) enthaltend Mittel zum Lesen der elektronischen Markierung (7), wobei die elektronische Markierung einen Speicher umfasst, in dem ein oder mehrere relevante Daten des Filterelementes (6) gespeichert sind, wobei das Filterelement (6) ausgewählt ist, um in der angesaugten Luft anwesende biologische und/oder chemische Schadstoffe aufzufangen und wobei die elektronische Markierung (7) getrennt und physikalisch losgelöst von dem Filterelement (6) vorliegt, um mit der Steuereinheit (8) verbunden zu werden und von dieser Steuereinheit (8) ausgelesen zu werden.

2. Die Arbeitsstation gemäß Anspruch 1, wobei das mindestens eine Filterelement (6) ausgewählt ist aus HEPA-Filtern und Aktivkohlefiltern.

3. Die Arbeitsstation gemäß Anspruch 1 oder 2, wobei das mindestens eine Filterelement (6) getrennt und beabstandet von der Arbeitsstation angeordnet ist.

4. Die Arbeitsstation gemäß Anspruch 1, 2 oder 3, wobei die in der elektronischen Markierung (7) gespeicherten Daten verschlüsselt sind und die elektronische Markierung den Schlüssel für die Verschlüsselung enthält.

5. Die Arbeitsstation gemäß irgendeinem der Ansprüche 1 bis 4, wobei die elektronische Markierung (7) ausgewählt ist aus einer Smartkarte, einer Chipkarte, einem RFID-Transponder (RFID: Identifizierung mittels elektromagnetischer Wellen) und die Steuereinheit (8) Mittel zum Erhalten und zur Verarbeitung der in der elektronischen Markierung gespeicherten Daten beinhaltet.

6. Die Arbeitsstation gemäß irgendeinem der Ansprüche 2 bis 5, wobei die Steuereinheit (8) einen Bildschirm (9) aufweist, wobei die auf das Filterelement (6) bezogenen Daten, die von der elektronischen Markierung (7) erhalten werden, angezeigt werden.

7. Die Arbeitsstation gemäß irgendeinem der Ansprüche 1 bis 5, wobei die elektronische Markierung (7) Anweisungen für die Verwendung der Arbeitsstation mit Dunstabzugshaube (1) beinhaltet.

8. Ein Verfahren zur Steuerung des Betriebs einer Labor-Arbeitsstation mit Dunstabzugshaube (1) gemäß Anspruch 1, und enthaltend ein Filterelement (6) ausgewählt, um in der angesaugten Luft anwesende biologische und/oder Schadstoffe aufzufangen, und eine Steuereinheit (8), umfassend die Schritte: Verknüpfen des Filterelements (6) mit einer elektronischen Markierung (7), wobei die elektronische Markierung (7) getrennt und losgelöst von dem Filterelement (6) vorliegt, Verbinden der losgelösten elektronischen Markierung (7) des Filterelementes (6) mit der Steuereinheit (8), um durch dieselbe ausgelesen zu werden und um einen oder mehrere auf der elektronischen Markierung (7) vorhandenen Daten zu erhalten, um den Betrieb der Arbeitsstation zu ermöglichen oder zu steuern, Verarbeiten der Daten mittels der Steuereinheit (8), und Modifizieren mindestens eines Betriebsparameters der Arbeitsstation, wenn dies auf der Grundlage der obigen Verarbeitung erforderlich ist.

9. Das Verfahren gemäß Anspruch 8, wobei solche Daten verschlüsselt werden und eine solche Steuereinheit (8) solche verschlüsselte Daten mittels weiterer auf der elektronischen Markierung (7) vorhandener Daten entschlüsselt.

10. Das Verfahren gemäß Anspruch 9, wobei die elektronische Markierung (7) der Steuereinheit (8) Anweisungen gibt, die wesentlich für den Betrieb der Arbeitsstation sind.

11. Das Verfahren gemäß irgendeinem der Ansprüche 8 bis 10, wobei die elektronische Markierung (7) in eine Leseeinheit der Steuereinheit (8) eingeführt wird.

12. Das Verfahren gemäß irgendeinem der Ansprüche 8 bis 11, wobei die von der Steuereinheit (8) erhaltenen Daten und/oder das Ergebnis ihrer Verarbeitung angezeigt werden, um den Benutzer der Arbeitsstation mit Dunstabzug (1) zu informieren.

13. Das Verfahren gemäß irgendeinem der Ansprüche 8 bis 12, wobei die Daten durch die Steuereinheit (8) von der elektronischen Markierung (7) gelöscht werden.

## Revendications

1. Poste de travail de laboratoire avec hotte d'aspiration (1), incluant une zone de travail accessible par un utilisateur (2), des moyens (4) pour aspirer l'air de la zone de travail (2) et pour l'acheminer vers une section d'évacuation (5), et au moins un élément de filtrage (6) positionné sur le trajet d'air aspiré, un marqueur électronique (7) associé audit élément de filtrage (6) et une unité de commande (8) comprenant des moyens pour lire ledit marqueur électronique (7), ledit marqueur électronique incluant une mémoire où sont stockées une ou plusieurs données associées à l'élément de filtrage (6), dans lequel ledit élément de filtrage est choisi pour piéger les polluants biologiques et/ou chimiques présents dans l'air aspiré et ledit marqueur électronique (7) est séparé et détaché physiquement dudit élément de filtrage (6) afin d'être associé à ladite unité de commande (8) et lu par celle-ci.

2. Poste de travail selon la revendication 1, dans lequel ledit au moins un élément de filtrage (6) est choisi parmi les filtres HEPA et les filtres à charbon actif.

3. Poste de travail selon la revendication 1 ou 2, dans lequel ledit au moins un élément de filtrage (6) est séparé et espacé dudit poste de travail.

4. Poste de travail selon la revendication 1, 2 ou 3, dans lequel lesdites données stockées dans ledit marqueur électronique (7) sont codées et ledit marqueur électronique inclut la clé dudit code.

5. Poste de travail selon l'une quelconque des revendications 1 à 4, dans lequel ledit marqueur électronique (7) est choisi parmi une carte intelligence, une carte à puce, une étiquette RFID et ladite unité de commande (8) inclut des moyens pour l'acquisition et le traitement des données stockées dans ledit marqueur électronique.

6. Poste de travail selon l'une quelconque des revendications 2 à 5, dans lequel ladite unité de commande (8) comprend un écran (9) où sont affichées lesdites données relatives à l'élément de filtrage (6) acquises par ledit marqueur électronique.

7. Poste de travail selon l'une quelconque des revendications 1 à 5, dans lequel ledit marqueur électronique (7) inclut les instructions destinées à l'utilisation du poste de travail avec hotte d'aspiration (1).

8. Procédé pour contrôler le fonctionnement d'un poste de travail de laboratoire avec une hotte d'aspiration (1) selon la revendication 1 et incluant un élément filtrant (6) choisi pour piéger les polluants biologiques et/ou chimiques présents dans l'air aspiré et une unité de commande (8), comprenant les étapes suivantes : l'association dudit élément filtrant (6) à un marqueur électronique (7), ledit marqueur électronique (7) étant séparé et détaché dudit élément filtrant (6), l'association dudit marqueur électronique détaché (7) de l'élément filtrant (6) à ladite unité de commande (8) afin qu'il soit lu par celle-ci et d'acquérir une ou plusieurs des données présentes sur ledit marqueur électronique (7) pour permettre ou contrôler le fonctionnement du poste de travail, le traitement desdites données au moyen de ladite unité de commande (8), et la modification d'au moins un paramètre de fonctionnement de poste de travail si besoin sur la base du traitement ci-dessus.

9. Procédé selon la revendication 8, dans lequel de telles données sont codées et une telle unité de commande (8) décode de telles données codées au moyen d'autres données sur ledit marqueur électronique (7).

10. Procédé selon la revendication 9, dans lequel ledit marqueur électronique (7) donne à ladite unité de commande (8) des instructions relatives au fonctionnement du poste de travail.

11. Procédé selon l'une quelconque des revendications 8 à 10, dans lequel ledit marqueur électronique (7) est inséré dans une unité de lecture de ladite unité de commande (8).

12. Procédé selon l'une quelconque des revendications 8 à 11, dans lequel les données acquises par l'unité de commande (8) et/ou le résultat de leur traitement sont affichés pour informer l'utilisateur du poste de travail avec hotte d'aspiration (1).

13. Procédé selon l'une quelconque des revendications 8 à 12, dans lequel lesdites données sont effacées dudit marqueur électronique (7) par l'unité de commande (8).
